Europäisches Patentamt

European Patent Office

Office européen des brevets

(11) Numéro de publication : **0 429 319 B1**

# (12) FASCICULE DE BREVET EUROPEEN

(45) Date de publication du fascicule du brevet :
**26.01.94 Bulletin 94/04**

(51) Int. Cl.⁵ : **G02F 1/37**

(21) Numéro de dépôt : **90403028.5**

(22) Date de dépôt : **26.10.90**

(54) **Doubleur de fréquence optique.**

(30) Priorité : **03.11.89 FR 8914419**

(43) Date de publication de la demande :
**29.05.91 Bulletin 91/22**

(45) Mention de la délivrance du brevet :
**26.01.94 Bulletin 94/04**

(84) Etats contractants désignés :
**DE GB IT NL**

(56) Documents cités :
**APPL. PHYS. LETT., vol. 55, no. 12, 18 septembre 1989, pages 1158-1160; G.T. MAKER et al.:
"Efficient frequency doubling of a modelocked diode-laser-pumped Nd:YAG laser"**

(56) Documents cités :
**REVUE TECHNIQUE THOMSON-CSF, vol. 16,
no. 3, septembre 1984, pages 473-492,
Gauthier-Villars, FR; J.P. HUIGNARD:
"Matériaux non linéaires à variation d'indice
photoinduite et applications"**

(73) Titulaire : **THOMSON-CSF
51, Esplanade du Général de Gaulle
F-92800 Puteaux (FR)**

(72) Inventeur : **Huignard, Jean-Pierre
THOMSON-CSF SCPI Cédex 67
F-92045 Paris la Défense (FR)**

(74) Mandataire : **Guérin, Michel et al
THOMSON-CSF SCPI B.P. 329 50, rue
Jean-Pierre Timbaud
F-92402 Courbevoie Cédex (FR)**

Jouve, 18, rue Saint-Denis, 75001 PARIS

## Description

L'invention concerne un doubleur de fréquence optique. Plus particulièrement, elle concerne un dispositif doubleur de la fréquence d'un signal émis par un laser et utilisant une cavité externe résonnante.

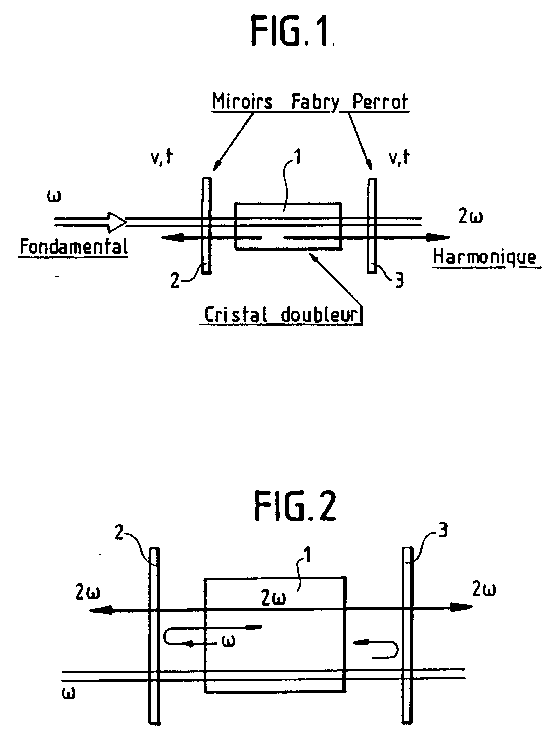

Il fait partie de l'art connu de générer l'harmonique $2\omega$ d'un laser émettant à la fréquence $\omega$ à partir d'un résonateur externe du type Fabry-Perot accordé à la fréquence fondamentale. Le schéma de principe d'un tel dispositif doubleur est représenté sur la figure 1. Dans cette configuration, un milieu non linéaire 1 est placé à l'intérieur d'une cavité Fabry-Perrot 2, 3 résonnante pour la fréquence $\omega$ alors que les miroirs 2 et 3 du résonateur sont parfaitement transparents pour la fréquence $2\omega$. Le fonctionnement détaillé de cette interaction est décrite dans le document de A. Ashkins et al, "Resonant optical second harmonic generation and mixing", IEEE Q. E., June 1966. Ce fonctionnement peut être résumé comme suit : lorsque le résonateur est parfaitement accordé sur la fréquence fondamentale la puissance optique dans le résonateur est largement augmentée par rapport à la configuration simple passage (gain $10^2$ à $10^3$ typiquement). La puissance optique générée sur l'harmonique 2 étant proportionnelle au carré de la densité de puissance incidente sur le cristal non linéaire, on obtient par cette technique d'excellents rendements de conversion ($\eta > 20\%$) à partir de faisceaux continus de faible puissance. Ces mécanismes sont décrits quantitativement par les deux relations suivantes :

$$\eta = \gamma\, \frac{P_c^2}{S^2}$$

$$P_2 = \eta\, P_1$$

$$P_2 = \gamma P_1 \frac{P_c^2}{S^2}$$

avec :

$P_1$ = puissance incidente
$P_c$ = puissance optique dans le résonateur
$r$ = coefficient de réflexion des miroirs Fabry-Perrot
$\gamma$ = coefficient de non linéarité du cristal
$\eta$ = rendement de conversion à $2\omega$
$P_2$ = puissance optique sur l'harmonique $2\omega$
$S$ = surface du faisceau sur le cristal doubleur.

Ainsi, en choisissant $r = 99\%$ à la fréquence fondamentale, on peut obtenir un gain de $10^4$ sur le rendement de conversion seconde harmonique. Outre ce gain, les autres avantages inhérents à cette structure sont les suivants :

- le résonateur du laser et le résonateur doubleur sont optimisés de façon indépendante ;
- le cristal non linéaire ne perturbe pas le fonctionnement du laser. En effet, un cristal non linéaire placé dans la cavité laser conduirait à une instabilité de la puissance émise sur l'harmonique 2.

Le problème essentiel posé par cette structure est de maintenir l'accord du résonateur externe sur la fréquence fondamentale. En effet, les principaux paramètres qui perturbent la condition d'accord du résonateur doubleur sont les suivants :

- le glissement de la fréquence fondamentale ;
- la modification de la longueur de cavité du résonateur doubleur (perturbations thermiques, ou mécaniques ...).

L'utilisation efficace de cette technique nécessite donc une stabilisation parfaite de ces différents paramètres par l'intermédiaire de dispositifs piézoélectriques et d'une régulation en température de l'ensemble Laser-résonateur externe.

L'invention concerne un dispositif permettant de résoudre ces difficultés.

L'invention concerne donc un doubleur de fréquence optique comprenant les caractéristiques techniques de la revendication 1. L'invention concerne également un doubleur de fréquence optique comprenant les caractéristiques techniques de la revendication 8.

Les différents objets et caractéristiques de l'invention apparaîtront plus clairement dans la description qui va suivre faite à titre d'exemple en se reportant aux figures annexées qui représentent :

- les figures 1 et 2, des dispositifs connus dans la technique et décrits précédemment ;
- la figure 3, un exemple de réalisation d'un doubleur de fréquence selon l'invention ;
- les figures 4 et 5, des variantes de réalisation d'un doubleur de fréquence selon l'invention.

Selon l'invention, on prévoit dans un doubleur de fréquence optique d'un faisceau émis par un laser et utilisant une cavité optique extérieure, de s'affranchir des problèmes mentionnés ci-dessous en plaçant le cristal doubleur de fréquence à l'intérieur d'une cavité s'adaptant en temps réel à toute perturbation. Dans ces conditions, la cavité est à chaque instant résonnante pour la fréquence fondamentale du laser, ce qui assure le maximum de rendement de conversion à la fréquence $2\omega$. Par ailleurs, les avantages spécifiques à la structure laser - cavité externe restent valables avec le dispositif proposé.

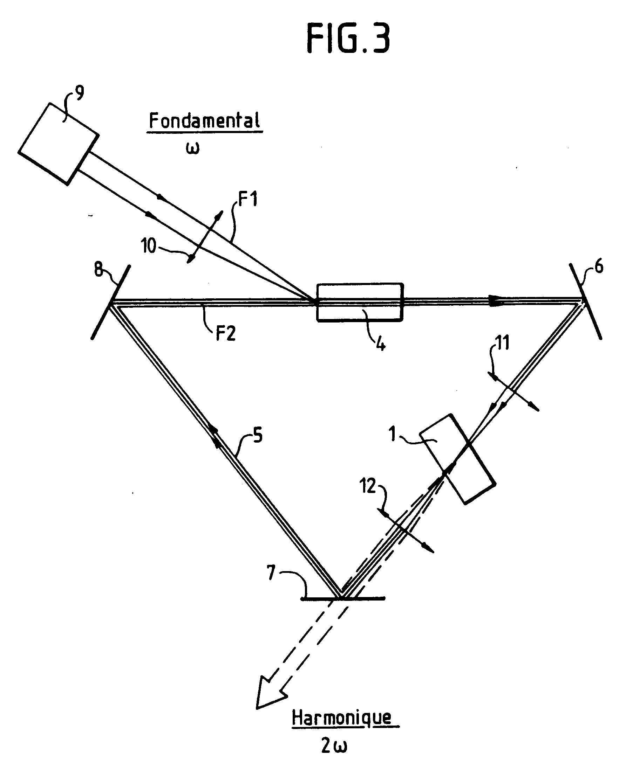

La figure 3 représente un exemple de réalisation préféré du dispositif de l'invention.

Le dispositif de la figure 3 comporte les principaux éléments suivants :

- un matériau 4 présentant une non linéarité d'ordre 3, obtenue par exemple, par variation d'indice photo-induite dans le matériau 4 qui peut être un cristal photoréfractif ou autres milieux ;
- un résonateur en anneau 5 ;
- un cristal doubleur 1 présentant une non linéarité d'ordre 2.

A titre d'exemple, le résonateur en anneau 5 est réalisé à l'aide de trois miroirs 6, 7, 8, dont l'un d'eux, le miroir 7 par exemple, est transparent pour l'onde harmonique d'ordre 2. Ce résonateur en anneau est réalisé à l'aide de trois miroirs sur la figure 3, mais cela n'est qu'un exemple de réalisation et il pourrait être réalisé de toute autre manière. La fonction du miroir 7 serait alors réalisé par un dispositif, connu dans la technique, permettant d'extraire de la cavité l'onde harmonique d'ordre 2.

Un faisceau lumineux $F_2$ peut donc circuler en boucle fermée dans cet anneau. Le cristal photoréfractif non linéaire ainsi que le cristal doubleur 1 sont placés sur le parcours fermé de l'anneau 5.

Le cristal photoréfractif 4 reçoit, d'une source laser 9, un faisceau lumineux $P_1$ de fréquence $\omega$ qui tient lieu d'onde de pompe pour le cristal photoréfractif 4. L'angle d'incidence du faisceau $F_1$ avec le faisceau $F_2$ de la boucle et l'orientation cristalline du cristal 4 par rapport à la direction du faisceau $F_2$ sont optimisés de façon à avoir un transfert d'énergie maximum du faisceau $F_1$ (onde de pompe) vers le faisceau $F_2$ de la boucle (onde signal).

Au cristal doubleur 1 sont associées une lentille d'entrée 11 permettant de focaliser le faisceau lumineux dans le cristal doubleur et une lentille de sortie 12 permettant de collimater le faisceau sortant du cristal.

Le fonctionnement du dispositif de l'invention est le suivant.

Le faisceau laser $F_1$ à fréquence fondamentale est focalisé sur le cristal 4 par une lentille 10 et constitue l'onde de pompe de l'oscillateur photoréfractif. Après optimisation du gain 2 ondes du milieu non linéaire 4, le faisceau de pompe est totalement transféré dans le résonateur en anneau 5. Le cristal doubleur 1 reçoit donc du cristal photoréfractif 4, un faisceau à la fréquence $\omega$ et transmet un faisceau à la fréquence fondamentale $\omega$ ainsi qu'un faisceau à la fréquence harmonique 2 $\omega$. Le milieu du cristal 4 étant dynamique (temps de réponse est fonction de l'intensité de l'onde pompe) le résonateur en anneau est dans ces conditions à chaque instant accordé sur la fréquence fondamentale de l'onde pompe $\omega$. Les deux conditions à satisfaire pour l'oscillation sont respectivement :

$$\Gamma > \alpha \; ; \; l = k \, \lambda$$

avec :

$\Gamma$    : coefficient de gain du milieu photoréfractif ;
$\alpha$    : coefficient d'absorption
$l$    : longueur de la cavité
$\lambda$    : longeur d'onde du faisceau $F_2$

La condition $l = k \, \lambda$ est automatiquement satisfaite par l'oscillateur dynamique. Par ailleurs, on a $\Gamma >> \alpha$ après optimisation de l'interaction 2 ondes dans les matériaux usuels ($Ba \, Ti \, O_3$, BSO, GaAs- $\Gamma = 8 \; cm^{-1}$ ; $\alpha < 1 \; cm^{-1}$).

La cavité est constituée de trois miroirs présentant un coefficient de réflexion de 100% à la longueur d'onde (fréquence $\omega$), l'un des miroirs étant parfaitement transparent à la fréquence 2 $\omega$. Le cristal doubleur est placé intracavité dans les conditions d'accord de phase pour les deux ondes à fréquence $\omega$ et 2 $\omega$. (Ex. : cristal KTP, BBO, $LiNbO_3$...). Afin de minimiser les pertes de la cavité, le cristal photoréfractif 4 et le cristal doubleur 5 sont munis de couches antiréfléchissantes ou placés sous l'incidence de Brewster.

Le dispositif de l'invention a fait l'objet d'une réalisation pratique comportant, pour une longueur d'onde du faisceau $F_1$ de valeur 1,06 micromètres :
- un cristal photoréfractif 4 :
  - GaAs
  - temps de réponse : 1 ms ;
- un cristal doubleur KTP, c'est-à-dire un matériau à base de $KTiPO_4$, ou bien du $LiNbO_3$ ou du BBO ;
- les coefficients de réflexion $r_1$, $r_2$, $r_3$ des miroirs 6, 7, 8 ont pour valeur $r_1 = r_2 = r_3 = 1$ pour la fréquence $\omega$;
- le coefficient de réflexion $r_2$ du miroir 7, à la fréquence 2$\omega$, a pour valeur O.

Dans le dispositif proposé, la cavité en anneau contenant le cristal doubleur est à chaque instant accordée sur la fréquence de l'onde fondamentale $\omega$. Le cristal photoréfractif compense à chaque instant les variations lentes de trajets optiques d'origine thermique ou mécanique (réponse DC $\rightarrow$ 1 kHz). Par ailleurs, la cavité en anneau assure la génération de l'onde harmonique dans la seule direction correspondant au sens de rotation de l'onde à fréquence $\omega$. (Gain d'un facteur 2 par rapport à une cavité Fabry-Perrot linéaire). L'ensemble des propriétés spécifiques à ce dispositif permet d'envisager de très bons rendements de conversion sur l'harmonique 2 à partir de lasers continus de faible puissance.

Applications à la génération de seconde harmonique à partir de lasers semiconducteurs (de longueurs d'ondes de $0.8\mu m$ à $O.4\mu m$) ou lasers YAG pompés diodes (de longueurs d'ondes de $1.06\mu m$ à $0.53\mu m$).

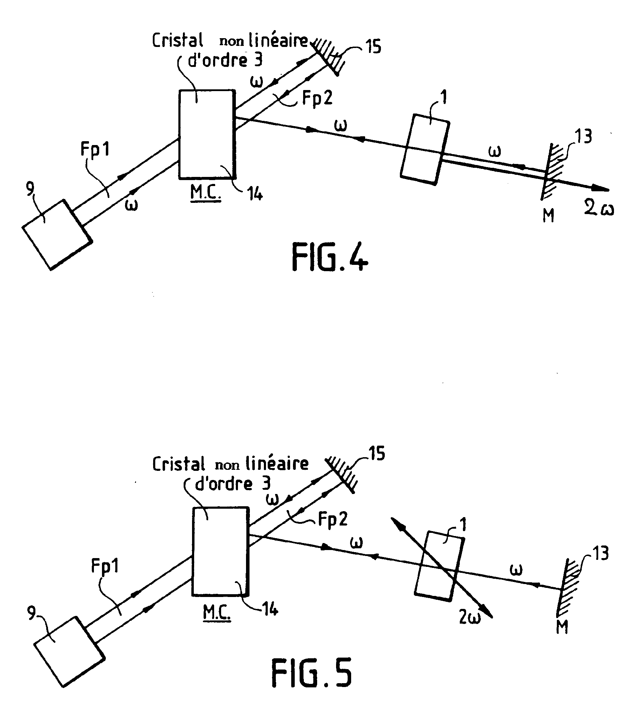

En se reportant aux figures 4 et 5 on va décrire une variante de réalisation de l'invention dans laquelle le cristal doubleur de fréquence est placé dans une cavité constituée par un miroir 13 et un miroir à conjugaison de phase.

Le dispositif de la figure 4 comporte un cristal non linéaire 14 utilisé en mélange quatre ondes.

On trouvera une description d'un cristal photoréfractif non linéaire fonctionnant en mélange quatre ondes dans l'article de JP. HUIGNARD "Matériaux non linéaires à variation d'indice photoinduite et applications" publié dans la revue Technique THOMSON CSF, n° 3, volume 16 de septembre 1984.

Le cristal non linéaire 14 reçoit de la source 9 un premier faisceau pompe Fp1. Ce faisceau est transmis à un miroir 15 qui réfléchit un deuxième faisceau pompe Fp2. Les deux faisceaux Fp1 et Fp2 sont à la fréquence $\omega$. Ils se propagent en sens inverses de façon colinaire. Ils interagissent dans le cristal non linéaire 14. Le cristal non linéaire fonctionne en mode de mélange quatre ondes dégénérées.

Un cristal doubleur de fréquence 1 est placé entre le cristal non linéaire 14 et un miroir 13. Le cristal non linéaire 14 utilisé en mélange quatre ondes jolie le rôle de miroir conjugué pour le faisceau à fréquence ω existant dans la cavité constituée par le miroir 13 et le miroir conjugué (cristal non linéaire 14).

Le miroir 13 est réfléchissant pour le faisceau à fréquence ω par contre il est transparent pour le faisceau à fréquence 2ω créé par le doubleur de fréquence 1, ce qui permet d'extraire le faisceau à fréquence double 2 ω.

La cavité optique constituée par le miroir 13 et le miroir conjugué 14 est une cavité du type Fabry Perot indépendantes des distorsions intracavité.

Selon une variante de réalisation de la figure 4, le cristal doubleur de fréquence 1 peut être orienté de façon que le faisceau à fréquence double 2ω ne soit pas colinéaire avec le faisceau à fréquence ω. Dans ce cas on peut extraire directement le faisceau à fréquence double sans que le miroir ait besoin d'être transparent à cette fréquence.

Il est bien évident que la description qui précède n'a été faite qu'à titre d'exemple non limitatif. D'autres variantes peuvent être envisagées. Les exemples numériques et de matériaux utilisés, notamment, n'ont été fournis que pour illustrer la description.

**Revendications**

1. Doubleur de fréquence optique comprenant une source lumineuse (9) émettant un faisceau lumineux ($F_1$) dont on veut doubler la fréquence, un cristal doubleur de fréquence (1), et un dispositif d'extraction (7) d'un faisceau à la fréquence harmonique double, permettant d'extraire d'un résonateur le faisceau à la fréquence harmonique double et maintenant dans le résonateur le faisceau à la fréquence de résonance caractérisé en ce qu'il comprend un résonateur en anneau (5) comportant en série dans le résonateur
   - un cristal photoréfractif non linéaire (4) recevant le faisceau lumineux ($F_1$) faisant office d'onde de pompe pour le cristal photoréfractif (4) ;
   - ledit cristal doubleur de fréquence (1) recevant le faisceau lumineux transmis par le cristal photoréfractif à une fréquence déterminée et transmettant un premier faisceau à cette fréquence et un deuxième faisceau à une fréquence harmonique double de cette fréquence déterminée ;
   - ledit dispositif d'extraction (7) du faisceau à la fréquence harmonique double.

2. Doubleur de fréquence selon la revendication 1, caractérisé en ce que le résonateur en anneau (5) est réalisé à l'aide d'au moins trois miroirs (6, 7, 8).

3. Doubleur de fréquence selon la revendication 2, caractérisé en ce que l'un des miroirs (7) permet d'extraire du résonateur en anneau le faisceau à la fréquence harmonique double.

4. Doubleur de fréquence selon la revendication 3 , caractérisé en ce que les trois miroirs (6, 7, 8) ont, à ladite fréquence déterminée, un coefficient de réflexion sensiblement égal à l'unité et que le miroir (7), permettant d'extraire le faisceau à la fréquence harmonique double, a un coefficient de réflexion sensiblement nul à la fréquence harmonique double.

5. Doubleur de fréquence selon la revendication 4, caractérisé en ce que le miroir (7) permettant d'extraire le faisceau à la fréquence harmonique double est placé de façon à recevoir directement du cristal doubleur de fréquence (1), les faisceaux que celui-ci transmet.

6. Doubleur de fréquence selon la revendication 1, caractérisé en ce que le cristal photoréfractif (4) est à base de GaAs.

7. Doubleur de fréquence selon la revendication 1, caractérisé en ce que le cristal doubleur (1) est à base de $LiNbO_3$, de $KTiPO_4$ ou de béta borate de baryum.

8. Doubleur de fréquence optique comprenant une source lumineuse (9) émettant un faisceau lumineux dont on veut doubler la fréquence, un cristal doubleur de fréquence (1), caractérisé en ce qu'il comporte :
   - un cristal photoréfractif non linéaire (14) fonctionnant en mélange quatre ondes dégénéré, recevant ledit faisceau lumineux (Fp1) faisant office de premier faisceau de pompe, et recevant aussi un deuxième faisceau de pompe (Fp2) en sens inverse et colinéaire au premier faisceau de pompe (Fp1) ;
   - un miroir (13) constituant avec le cristal non linéaire (14) tenant lieu de miroir conjugué, une cavité optique ;
   - ledit cristal doubleur de fréquence (1) placé dans la cavité optique (13-14).

9. Doubleur de fréquence selon la revendication 8, caractérisé en ce que le miroir (13) est transparent à la fréquence double dudit faisceau lumineux (Fp1).

## Patentansprüche

1. Optischer Frequenzverdoppler mit einer Lichtquelle (9), die einen Lichtstrahl ($F_1$) emittiert, dessen Frequenz verdoppelt werden soll, einem Frequenzverdopplungskristall (1) und einer Entnahmeeinrichtung (7) für einen Strahl mit der doppelten harmonischen Frequenz, die die Entnahme des Strahls mit der doppelten harmonischen Frequenz aus einem Resonator gestattet und im Resonator den Strahl mit der Resonanzfrequenz aufrechterhält, dadurch gekennzeichnet, daß er einen Ringresonator (5) aufweist, der im Resonator hintereinander enthält
   - einen nichtlinearen lichtbrechenden Kristall (4), der den Lichtstrahl ($F_1$) empfängt, der für den lichtbrechenden Kristall (4) als Pumpwelle dient;
   - wobei der Frequenzverdopplungskristall (1) den vom lichtbrechenden Kristall mit einer bestimmten Frequenz übertragenen Lichtstrahl empfängt und einen ersten Strahl mit dieser Frequenz und einen zweiten Strahl mit einer doppelten harmonischen Frequenz dieser bestimmten Frequenz überträgt;
      - die Entnahmeeinrichtung (7) für den Strahl mit der doppelten harmonischen Frequenz.

2. Frequenverdoppler gemäß Anspruch 1, dadurch gekennzeichnet, daß der Ringresonator (5) mit Hilfe von wenigstens drei Spiegeln (6, 7, 8) verwirklicht ist.

3. Frequenzverdoppler gemäß Anspruch 2, dadurch gekennzeichnet, daß einer der Spiegel (7) die Entnahme des Strahls mit der doppelten harmonischen Frequenz aus dem Ringresonator gestattet.

4. Frequenzverdoppler gemäß Anspruch 3, dadurch gekennzeichnet, daß die drei Spiegel (6, 7, 8) bei der bestimmten Frequenz einen Reflexionskoeffizienten besitzen, der im wesentlichen gleich Eins ist, und daß der Spiegel (7), der die Entnahme des Strahls mit der doppelten harmonischen Frequenz gestattet, einen Reflexionskoeffizienten besitzt, der bei der doppelten harmonischen Frequenz im wesentlichen Null ist.

5. Frequenzverdoppler gemäß Anspruch 4, dadurch gekennzeichnet, daß der Spiegel (7), der die Entnahme des Strahls mit der doppelten harmonischen Frequenz gestattet, so angeordnet ist, daß er vom Frequenzverdopplungskristall (1) diejenigen Strahlen direkt empfängt, die dieser überträgt.

6. Frequenzverdoppler gemäß Anspruch 1, dadurch gekennzeichnet, daß der lichtbrechende Kristall (4) auf GaAs basiert.

7. Frequenzverdoppler gemäß Anspruch 1, dadurch gekennzeichnet, daß der Verdopplungskristall (1) auf $LiNbO_3$, auf $KTiPO_4$ oder auf Beta-Bariumborat basiert.

8. Optischer Frequenzverdoppler mit einer Lichtquelle (9), die einen Lichtstrahl emittiert, dessen Frequenz verdoppelt werden soll, und einem Frequenzverdopplungskristall (1), dadurch gekennzeichnet, daß er umfaßt:
   - einen nichtlinearen lichtbrechenden Kristall (14), dessen Arbeitsweise auf einer entarteten Mischung von vier Wellen beruht und der den Lichtstrahl (Fp1) empfängt, der als erster Pumpstrahl dient, und außerdem einen zweiten Pumpstrahl (Fp2) empfängt, der entgegengesetzte Richtung besitzt und mit dem ersten Pumpstrahl (Fp1) kollinear ist;
   - einen Spiegel (13), der mit dem als konjugierter Spiegel dienenden nichtlinearen Kristall (14) einen optischen Hohlraum bildet;
   - den Frequenzverdopplungskristall (1), der im optischen Hohlraum (13-14) angeordnet ist.

9. Frequenzverdoppler gemäß Anspruch 8, dadurch gekennzeichnet, daß der Spiegel (13) bei der doppelten Frequnz des Lichtstrahls (Fp1) durchlässig ist.

## Claims

1. Optical frequency doubler comprising a light source (9) emitting a light beam ($F_1$), of which it is desired to double the frequency, a frequency doubler crystal (1) and a device (7) for extracting a beam at the double harmonic frequency, permitting the extraction, from a resonator, of the beam at the double harmonic frequency and maintaining within the resonator the beam at the resonant frequency, characterized in that it comprises a ring-shaped resonator (5) including in series within the resonator:
   - a nonlinear photorefractive crystal (4) receiving the light beam ($F_1$) acting as pump wave for the photorefractive crystal (4);
   - said frequency doubler crystal (1) receiving the light beam transmitted by the photorefractive crystal at a specified frequency and transmitting a first beam at this frequency and a second beam at a harmonic frequency which is twice this specified frequency;

- said device (7) for extracting the beam at the double harmonic frequency.

2. Frequency doubler according to Claim 1, characterized in that the ring-shaped resonator (5) is constructed with the aid of at least three mirrors (6, 7, 8).

3. Frequency doubler according to Claim 2, characterized in that one of the mirrors (7) permits the extraction, from the ring-shaped resonator, of the beam at the double harmonic frequency.

4. Frequency doubler according to Claim 3, characterized in that the three mirrors (6, 7, 8) have, at said specified frequency, a reflection coefficient which is substantially equal to zero and in that the mirror (7), permitting the extraction of the beam at the double harmonic frequency, has a reflection coefficient of substantially zero at the double harmonic frequency.

5. Frequency doubler according to Claim 4, characterized in that the mirror (7) permitting the extraction of the beam at the double harmonic frequency is placed so as to receive directly from the frequency doubler crystal (1) the beams which the latter transmits.

6. Frequency doubler according to Claim 1, characterized in that the photorefractive crystal (4) is GaAs-based.

7. Frequency doubler according to Claim 1, characterized in that the doubler crystal (1) is based on $LINbO_3$, on $KTiPO_4$ or on barium beta-borate.

8. Optical frequency doubler comprising a light source (9) emitting a light beam of which it is desired to double the frequency, a frequency doubler crystal (1), characterized in that it includes:
   - a nonlinear photorefractive crystal (14) functioning in degenerate four-wave mixing, receiving said light beam (Fp1) acting as first pump beam, and also receiving a second pump beam (Fp2) in the opposite sense and colinear with the first pump beam (Fp1);
   - a mirror (13) constituting together with the nonlinear crystal (14) taking the place of a conjugate mirror, an optical cavity;
   - said frequency doubler crystal (1) placed within the optical cavity (13-14).

9. Frequency doubler according to Claim 8, characterized in that the mirror (13) is transparent at the double frequency of said light beam (Fp1).

# FIG.1.

Miroirs Fabry Perrot

v,t

ω

1

v,t

Fondamental

2ω

Harmonique

2

3

Cristal doubleur

# FIG.2

2

3

1

2ω

2ω

2ω

ω

ω

# FIG.3

Fondamental
ω

F1

Fondamental ω

Harmonique
2ω

Cristal non linéaire
(d'ordre 3)

Fp1

9

ω

M.C. 14

ω

Fp2 ω

1

ω 13

M 2ω

15

# FIG.4

Cristal non linéaire
(d'ordre 3)

Fp1

9

ω

M.C. 14

ω

Fp2 ω

1

ω 13

2ω

M

15

# FIG.5